# EUROPÄISCHE PATENTSCHRIFT

(11) **EP 1 300 105 B1**
(45) Veröffentlichungstag und Bekanntmachung des Hinweises auf die Patenterteilung: **23.06.2004**
(21) Anmeldenummer: 02021972.1
(22) Anmeldetag: 30.09.2002
(51) Int. Cl.: A47J 31/46

(54) **Espressomaschine mit einem drehbaren, keramischen Scheibenventil als selektiver Wasser-/Dampfverteiler**
Espresso machine with a revolving ceramic disc valve for the selective distribution of water/steam
Machine à espresso avec une plaquette rotative réalisée dans un matériau céramique pour la distribution sélective d'eau/vapeur

(30) Priorität: 04.10.2001 DE 10148931
(43) Veröffentlichungstag der Anmeldung: 09.04.2003
(73) Patentinhaber: Eugster/Frismag AG, CH-8590 Romanshorn (CH)
(72) Erfinder: Fischer, Daniel, 8590 Romanshorn (CH)
(74) Vertreter: Schubert, Siegmar, Dipl.-Ing.

(56) Entgegenhaltungen:
- EP-A- 1 106 126
- DE-A- 4 203 088
- US-A- 1 822 433
- US-A- 5 207 149

## Beschreibung

Die Erfindung betrifft eine Espressomaschine mit einem drehbaren, keramischen Scheibenventil als selektiver Wasser-/Dampfverteiler nach dem Oberbegriff des Anspruchs 1.

Aus der Praxis bekannte Espressomaschinen sind in der Regel so ausgestattet, daß mit ihnen nicht nur Espresso, sondern auch Milchschaum für Cappuccino oder Heißwasser für unterschiedliche Verwendungen zubereitet werden kann. Hierzu weisen diese Espressomaschinen Ventile auf, welche jeweils einen Heißwassererzeuger oder einen Dampfgenerator, von Hand oder über ein Programmwerk gesteuert, mit dem jeweils vorgesehenen Funktionselement, beispielsweise einer Düse zur Abgabe von Heißwasser, verbinden. Als Ventile werden statt einer Anordnung magnetisch gesteuerter Einzelventile in jüngerer Zeit bevorzugt drehbare keramische Scheibenventile eingesetzt, die als Mehrwegeventile drehwinkelabhängig eine ausgewählte Ableitung, z.B. eines Heißwassererzeugers oder Dampfgenerators mit einer ausgewählten Zuleitung zu einem Funktionselement, beispielsweise einer Düse, verbinden können. Die keramischen Scheibenventile bestehen im wesentlichen aus einer ortsfesten Keramikscheibe mit Durchlaßöffnungen, die mit den Zu- und Ableitungen des zu steuernden flüssigen oder gasförmigen Mediums fest verbunden sind, und einer zweiten, konzentrisch zu der ortsfesten Keramikscheibe drehbaren Keramikscheibe, die auf ersterer federbelastet dichtend aufliegt und mit Verbindungskanälen versehen ist, über die bei bestimmten Drehwinkelstellungen ausgewählte Zu- und Ableitungsöffnungen der ortsfesten Keramikscheibe miteinander verbunden werden. Ein Antriebsmotor, der zur Einstellung des keramischen Scheibenventils dient, kann entweder von Hand oder bei automatischem Betrieb durch ein Programmschaltwerk, d.h. eine Steuerungseinrichtung, gesteuert werden.

Bei einer bekannten Espressomaschine mit einem drehbaren keramischen Scheibenventil als selektiver Wasserverteiler und im übrigen gemäß der eingangs genannten Gattung steht ein elektrischer Antriebsmotor über ein Antriebsritzel mit einer gezackten Scheibe in direktem Getriebeeingriff, die mit der drehbaren Keramikscheibe des Scheibenventils verbunden ist (EP 1 106 126 A1). Um eine sehr hohe Präzision der Drehwinkeleinstellung der drehbaren Keramikscheibe zu erreichen, kann als Antriebsmotor ein Schrittmotor vorgesehen sein. Die Steuerung des Schrittmotors der zur Verstellung des Scheibenventils eine Vielzahl von Einzelimpulsen benötigt, kann aber aufwendig sein und trotzdem unter Umständen nicht zu dem gewünschten Ziel führen, etwa weil der Schrittmotor beim Anlauf nicht allen Impulsen der gesteuerten Betriebsspannung folgt und/oder beim Ausschalten aufgrund des Trägheitsmoments des mit ihm verbundenen Scheibenventils und der Getriebeelemente nachläuft. - Mit letzterem Nachteil muß in noch höherem Maße bei einfacheren Antriebsmotoren, beispielsweise einem Synchronmotor oder Universalmotor anstelle des Schrittmotors gerechnet werden, selbst wenn der Antriebsmotor nockengesteuert in einer gewünschten Drehstellung der drehbaren Keramikscheibe abgeschaltet wird.

Das Erreichen einer exakten Drehwinkelstellung der drehbaren Keramikscheibe des Scheibenventils und damit eine schnelle, exakte Überdeckung der miteinander zu verbindenden Öffnungen in dem Scheibenventil, wird in der Regel angestrebt, um zuverlässig gleichmäßige Flußmengen zu gewährleisten und störende Strömungsgeräusche zu vermeiden, die sonst bei nicht exakter Überdekkung an Lochkanten entstehen können.

Der vorliegenden Erfindung liegt daher die Aufgabe zugrunde, eine Espressomaschine mit einem drehbaren, keramischen Scheibenventil als selektiver Wasser-/Dampfverteiler so auszubilden, daß in wenig aufwendiger Weise die Genauigkeit der Drehwinkeleinstellung des keramischen Scheibenventils erhöht wird.

Diese Aufgabe wird durch die Ausbildung der Espressomaschine mit einem drehbaren, keramischen Scheibenventil mit den kennzeichnenden Merkmalen des Anspruchs 1 prinzipiell gelöst.

Durch Einfügung eines Maltesergetriebes in die Antriebsverbindung zwischen dem Antriebsmotor und dem drehbaren, keramischen Scheibenventil, wird eine Voraussetzung dafür geschaffen, daß das drehbare Scheibenventil schnell und exakt in die gewünschte Schaltstellung, d.h. Drehwinkelstellung der zu dem Scheibenventil gehörenden drehbaren Keramikscheibe eingestellt wird. Die Einstellung erfolgt dabei entsprechend der Ausbildung des Maltesergetriebes in vorgegebenen Schaltschritten. Demgemäß braucht die Steuerung für den Antriebsmotor nur so ausgelegt zu sein, daß jeweils die gewünschten Schaltschritte zurückgelegt werden, nicht aber ein kontinuierlicher Drehbereich zwischen Schaltpositionen des Scheibenventils.

Im einzelnen sind zur Realisierung der Erfindung die Merkmale gemäß Anspruch 2 vorgesehen, daß in dem Maltesergetriebe eine Malteserscheibe mit radialen Antriebsschlitzen sowie ein mit dem Antriebsmotor in Verbindung stehendes drehbares Treiberelement mit einem Treiberstift dergestalt ausgebildet sind, daß der Treiberstift bei einer Umdrehung des Treiberelements die Malteserscheibe um einen Schaltschritt mitnimmt, indem der Treiberstift im Verlauf nur eines Teils einer Umdrehung des Treiberelements in einen der Antriebsschlitze eingreift, und daß die Malteserscheibe zwischen je zwei Antriebsschlitzen je eine Arretierungsfalle aufweist, in die ein Arretierungselement in den Drehstellungen der Malteserscheibe und des Treiberelements bei Beendigung je eines Schaltschritts eingreift.

Durch die Arretierung der Malteserscheibe durch Eingriff des Arretierungselements in eine der Arretierungsfallen bei Beendigung eines Schaltschrittes wird erreicht, daß die Malteserscheibe bei Beendigung des Schaltschritts nicht nachschleudert. Ein Nachlauf des Antriebsmotors wirkt sich schon dadurch nicht auf die Malteserscheibe aus, weil der Treiberstift an dem drehbaren Treiberelement außer Eingriff mit dem radialen Antriebsschlitz gelangt, über den der Antrieb der Malteserscheibe vor Beendigung des Schaltschritts erfolgte. Es sei bemerkt, daß in der Malteserscheibe für je einen Schaltschritt ein Antriebsschlitz ausgeformt ist. Dabei kann jedem Schaltschritt der Malteserscheibe oder mehreren solcher Schaltschritte eine gewünschte Einstellung bzw. Drehwinkelstellung des drehbaren, keramischen Scheibenventils entsprechen. Bevorzugt ist die Malteserscheibe unmittelbar mit dem drehbaren, keramischen Scheibenventil, d.h. dessen drehbarer Keramikscheibe verbunden.

Zur gewünschten Einstellung des drehbaren, keramischen Scheibenventils kann die jeweilige Position der Malteserscheibe gemäß Anspruch 3 mit einem Speicher in der Steuerungseinrichtung als Referenz einer Einstellungsänderung des Scheibenventils erfaßt werden. Anstelle der Drehstellungsinformation des Scheibenventils bzw. der Malteserscheibe kann auch eine Umdrehungszahl des Treiberelements dienen, da zur Erzielung je eines Schaltschritts das Treiberelement eine volle Umdrehung zurücklegt.

Alternativ dazu kann die Steuerung gemäß Anspruch 4 eine Rückstelleinrichtung umfassen, mit der die Malteserscheibe vor eine Einstellungsänderung selbsttätig zurückgestellt wird. Bei einer Einstellungsänderung können dann die Schaltschritte, ausgehend von einer Nullstellung der Malteserscheibe, zurückgelegt und einfach gezählt werden. Unter Beibehalt der exakten Verstellung in Schaltschritten kann mit der Steuerung die Drehrichtung des Antriebsmotors und des Maltesergetriebes mit Arretierung reversibel gewählt werden, womit die gewünschte Einstellung des Scheibenventils in bestimmten Einstellsituationen schneller erreicht werden kann. Damit ist ein effektives, drehrichtungsunabhängiges, programmsteuerbares Mehrwegeventil für Espressomaschinen geschaffen wird.

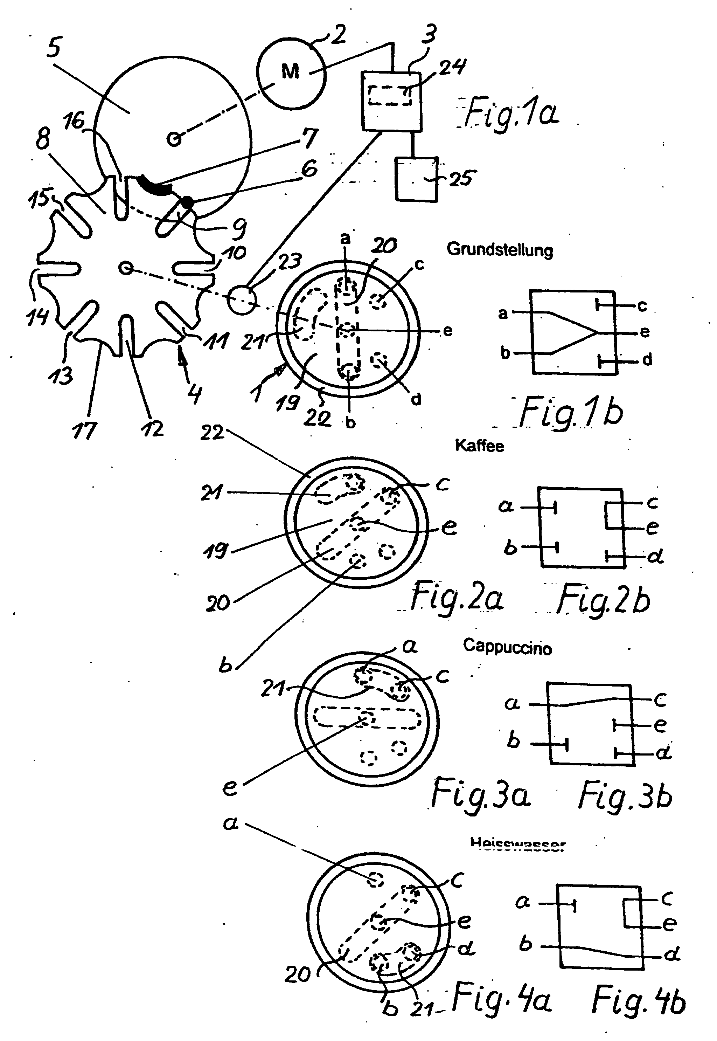

Die Erfindung wird im folgenden anhand einer Zeichnung mit fünf Figuren beschrieben, wobei die Figuren 2a, 2b; 3a, 3b; 4a, 4b; 5a, 5b jeweils als zusammengehörig anzusehen sind. Aus der Beschreibung können sich Merkmale der Erfindung im einzelnen und weitere vorteilhafte Wirkungen ergeben. Es zeigt:
- Figur 1a: in schematischer Darstellung einen Antrieb eines drehbaren, keramischen Scheibenventils in einer Grundstellung,
- Figur 1b: ein zu der Grundstellung gemäß Figur 1a gehörendes Ventilsymbol,
- Figur 2a: das drehbare, keramische Scheibenventil in einer ersten Einstellung zur Kaffeezubereitung,
- Figur 2b: das zu der ersten Einstellung gehörende Ventilsymbol,
- Figur 3a: das drehbare, keramische Scheibenventil in einer zweiten Einstellung zur Cappuccinozubereitung,
- Figur 3b: das zu der zweiten Einstellung gehörende Ventilsymbol,
- Figur 4a: das drehbare, keramische Scheibenventil in einer dritten Einstellung zur Heißwasserbereitung und
- Figur 4b: das zu der dritten Einstellung gehörende Ventilsymbol.

In Figur 1a ist zur Einstellung eines drehbaren, keramischen Scheibenventils, welches allgemein mit 1 bezeichnet ist ein universeller, elektrischer Antriebsmotor 2 vorgesehen, der von einer Steuerung bzw. Steuerungseinrichtung 3 gesteuert mit elektrischer Energie versorgt wird. Durch den Antriebsmotor 2 wird das drehbare keramische Scheibenventil 1 in verschiedenen Drehwinkelstellungen - Grundstellung sowie erste bis dritte Einstellung - über ein allgemein mit 4 bezeichnetes Maltesergetriebe eingestellt.

Das Maltesergetriebe besteht im wesentlichen aus einem drehbaren Treiberelement 5, welches hier scheibenförmig ausgebildet ist und einen Treiberstift 6 an dessen Peripherie trägt. In der Nähe des Treiberstifts 6 ist auf dem Treiberelement 5 weiterhin ein Arretierungselement 7 angebracht. Benachbart zu dem scheibenförmigen drehbaren Treiberelement ist eine Malteserscheibe 8 parallelachsig angeordnet. Sie weist in gleichmäßigen Umfangsabständen radiale Antriebsschlitze 9 bis 16 auf. Das drehbare Treiberelement 5 und die Malteserscheibe 8 sind so nebeneinander angeordnet, daß der Treiberstift 6 in einen der Antriebsschlitze, z.B. 9, eingreifen kann und mit diesem die Malteserscheibe 8 drehen kann, bis nach Zurücklegung eines Schaltschritts der Treiberstift 6 den Antriebsschlitz verläßt und somit keine weitere Drehbewegung auf die Malteserscheibe 8 übertragen kann. Letztere Situation ist in Figur 1a dargestellt. Das Treiberelement 5 hat während dieses Schaltschritts eine vollständige Umdrehung zurückgelegt.

Um die Bewegung der Malteserscheibe 8 jeweils nach Ablauf eines Schaltschrittes zu stoppen, ist aus der Malteserscheibe 8 zwischen je zwei benachbarten Antriebsschlitzen, z.B. 11, 12, je eine bogenförmige Arretierungsfalle 17 ausgeformt, die mit einem Arretierungselement 18, welches auf dem Treiberelement 5 in der Nähe des Treiberstifts 6 angebracht ist, lösbar arretiert wird. Das Arretierungselement 18 gleitet zu Beginn eines nächsten Schaltschrittes aus der Arretierungsfalle 17 heraus, um ebenfalls einen vollen Umlauf mit dem Treiberelement durchzuführen, bis es in die nächste Arretierungsfalle einlaufen kann.

Für jeden Schaltschritt der Malteserscheibe 8 ist somit eine volle Umdrehung des Treiberelements 5 erforderlich. Die Anzahl der vorgesehenen Schaltschritte ist durch die Anzahl der Antriebsschlitze 9 bis 16 der Malteserscheibe 8 vorgegeben. Im vorliegenden Fall sind also 8 Schaltschritte realisierbar. Jedem Schaltschritt ist bei direkter Kupplung mit dem drehbaren keramischen Scheibenventil 1 eine Stellung des Scheibenventils zugeordnet. Es ist jedoch denkbar, daß nicht jede mögliche Position des Scheibenventils genutzt wird.

Im einzelnen ist das drehbare, keramische Scheibenventil 1 in Figur 1a in Grundstellung. In diesem Fall befindet sich eine drehbare Keramikscheibe 19 des Scheibenventils, aus der Verbindungskanäle 20, 21 ausgeformt sind, so . gegenüber einer ortsfesten Keramikscheibe 22, die je eine Öffnung für Dampfeintritt a, für Heißwassereintritt b, für Dampfaustritt c und für Heißwasseraustritt d aufweist, daß die Öffnung für den Dampfeintritt a und die Öffnung für Heißwassereintritt b gemeinsam mit einer Durchtrittsöffnung e in der ortsfesten Keramikscheibe 22 kommunizieren. Die Öffnungen für Dampfaustritt c und Heißwasseraustritt d sind dabei gesperrt. - Die Durchgangsöffnung e ist zur Entspannung des Dampfes bzw. Heißwassers vorgesehen. - In einer weiteren Drehstellung des drehbaren Scheibenventils nach Zurücklegen eines Schaltschrittes des Maltesergetriebes befindet sich das Scheibenventil in der ersten Einstellung zur Kaffeebereitung. Dabei steht die Öffnung für Dampfaustritt c mit der Durchgangsöffnung e in Verbindung, während alle anderen Öffnungen gesperrt sind. - In einer zweiten Einstellung des Scheibenventils nach Zurücklegen eines weiteren Schaltschrittes des Maltesergetriebes sind zur Cappuccinozubereitung die Öffnung für den Dampfeintritt a und die Öffnung für den Dampfaustritt c durch den Verbindungskanal 21 miteinander verbunden, während alle anderen Öffnungen gesperrt sind. - In einer dritten Einstellung des Scheibenventils zur Heißwasserbereitung, nachdem das Maltesergetriebe 19 zwei weitere Schaltschritte zurückgelegt hat, sind die Öffnung für Heißwassereintritt b und die Öffnung für Heißwasseraustritt d miteinander verbunden. Außerdem steht die Öffnung für Dampfaustritt c mit der Durchgangsöffnung e über den Verbindungskanal 20 in Verbindung. Die Öffnung für Dampfeintritt a ist gesperrt. Die Steuerungseinrichtung 3 beruht auf einem durch das Maltesergetriebe 4 definierten Schaltschritt als Zähleinheit, d.h. feiner abgestufte Einheiten sind nicht erforderlich, da das Maltesergetriebe für die gewünschte Genauigkeit der Einstellung des drehbaren Scheibenventils 1 sorgt. Die Steuerung für die eine volle Umdrehung, welche das Treiberelement 5 für jeweils einen Schaltschritt zurückzulegen hat, kann in einer ersten Ausführungsform der Steuerungseinrichtung 3, die in Figur 1a schematisch dargestellt ist, dadurch erfolgen, daß die jeweilige Position der Malteserscheibe 8 oder des Treiberelements 5 durch einen Positionsgeber 23 erfaßt wird, der mit der Malteserscheibe 8 oder alternativ mit dem Treiberelement 5 gekoppelt ist. Die damit jeweils erfaßte Drehstellung, die hier einer Drehstellung des drehbaren Scheibenventils 1 gleich ist, wobei Getriebeelemente zwischen der Malteserscheibe 8 und dem Scheibenventil 1 entfallen, kann in der Steuerungseinrichtung mit einem Speicher 24 gespeichert werden. Eine neue gewünschte Drehstellung bzw. Position des Scheibenventils für eine bestimmte Funktion kann in die Steuerungseinrichtung mit einem manuell zu betätigendem Einsteller 25 vorgegeben werden. Damit ist es möglich, jede gewünschte Position der Malteserscheibe und des keramischen Scheibenventils von der letzten Stellung der Malteserscheibe ausgehend anzusteuern. Alternativ dazu kann die Steuerungseinrichtung so ausgelegt werden, daß die Malteserscheibe 8 nach einem abgeschlossenen Arbeitsspiel selbsttätig in ihre Grundstellung zurückläuft und jede neue Anwahl mittels des Einstellers 25 aus der Grundstellung heraus gestartet wird.

Bei beiden Varianten der Steuerungseinrichtung kann es vorteilhaft sein, wenn die Steuerungseinrichtung und die mit ihr gesteuerten Elemente, d.h. die das Maltesergetriebe mit Arretierung reversibel ausgeführt sind. Denn es kann damit eine neue Drehstellung der Malteserscheibe bzw. des drehbaren Scheibenventils auf kürzestem Wege und in kürzester Zeit eingestellt werden, wenn die Steuerungseinrichtung eine voreingestellte Logik zur Erkennung des kürzesten Schaltweges beinhaltet.

### Bezugszahlenliste

- 1: drehbares, keramisches Scheibenventil
- 2: Antriebsmotor
- 3: Steuerungseinrichtung
- 4: Maltesergetriebe
- 5: Treiberelement
- 6: Treiberstift
- 7: Arretierungselement
- 8: Malteserscheibe
- 9: Antriebsschlitze
- 10: Antriebsschlitze
- 11: Antriebsschlitze
- 12: Antriebsschlitze
- 13: Antriebsschlitze
- 14: Antriebsschlitze
- 15: Antriebsschlitze
- 16: Antriebsschlitze
- 17: Arretierungsfalle
- 18: Arretierungselement
- 19: drehbare Keramikscheibe
- 20: Verbindungskanal
- 21: Verbindungskanal
- 22: ortsfeste Keramikscheibe
- 23: Positionsgeber
- 24: Speicher
- 25: Einsteller

## Patentansprüche

1. Espressomaschine mit einem drehbaren, keramischen Scheibenventil (1) als selektiver Wasserdampfverteiler, der mit einem Antriebsmotor (2) in Antriebsverbindung steht, sowie mit einer Steuereinrichtung (3) zur Steuerung des Antriebsmotors (2),
**dadurch gekennzeichnet,**
**daß** in die Antriebsverbindung zwischen dem Antriebsmotor (2) und dem drehbaren, keramischen Scheibenventil (1) ein Maltesergetriebe (4) eingefügt ist, welches das drehbare, keramische Scheibenventil (1) in Schaltschritten einstellt, und daß die Steuerungseinrichtung (3) den Antriebsmotor (2) nach je mindestens einem Schaltschritt des Maltesergetriebes (4) abschaltet.

2. Espressomaschine nach Anspruch 1,
**dadurch gekennzeichnet,**
**daß** in dem Maltesergetriebe (4) eine Malteserscheibe (8) mit radialen Antriebsschlitzen (9 bis 16) sowie ein mit dem Antriebsmotor (2) in Verbindung stehendes drehbares Treiberelement (5) mit einem Treiberstift (6) dergestalt ausgebildet sind, daß der Treiberstift (6) bei einer Umdrehung des Treiberelements (5) die Malteserscheibe (8) um einen Schaltschritt mitnimmt, indem der Treiberstift (6) im Verlauf nur eines Teils einer Umdrehung des Treiberelements (5) in einen der Antriebsschlitze (9 bis 16) eingreift, und daß die Malteserscheibe (8) zwischen je zwei Antriebsschlitzen (9 bis 16) je eine Arretierungsfalle (17) aufweist, in die ein Arretierungselement (7) in den Drehstellungen der Malteserscheibe (8) und des Treiberelements (5) bei Beendigung je eines Schaltschritts eingreift.

3. Espressomaschine nach Anspruch 1 oder 2,
**dadurch gekennzeichnet,**
**daß** die Steuerungseinrichtung (3) einen Speicher (24) für eine Drehstellungsinformation des Scheibenventils (1) bzw. der Malteserscheibe (8) oder Umdrehungszahl des Treiberelements (5) als Referenz einer Einstellungsänderung des Scheibenventils (1) umfaßt.

4. Espressomaschine nach Anspruch 1 oder 2,
**dadurch gekennzeichnet,**
**daß** die Steuerungseinrichtung (3) eine Rückstelleinrichtung umfaßt, mit der die Malteserscheibe (8) vor einer Einstellungsänderung selbsttätig zurückgestellt wird.

5. Espressomaschine nach wenigstens einem der Ansprüche 1 bis 4,
**dadurch gekennzeichnet,**
**daß** mit der Steuerungseinrichtung (3) die Drehrichtung des Antriebsmotors (2) und des Maltesergetriebes (4) mit Arretierung reversibel sind.

## Claims

1. Espresso machine with a revolving ceramic disc valve (1) for the selective distribution of steam, which is in driven connection with a drive motor (2), and with a control device (3) for controlling the drive motor (2),
**characterised in that**
fitted in the drive connection between the drive motor (2) and the revolving ceramic disc valve (1) there is a Maltese-cross transmission (4) which positions the revolving ceramic disc valve (1) in steps, and the control device (3) switches off the drive motor (2) each time after at least one step of the Maltese-cross transmission.

2. Espresso machine according to Claim 1,
**characterised in that**
in the Maltese-cross transmission (4) a Maltese-cross disc (8) with radial drive slots (9 to 16) and a revolving driver element (5) with a drive pin (6) which is in connection with the drive motor (2), are integrated in such manner that when the driver element (5) rotates once, the drive pin (6) moves the Maltese-cross disc (8) round by one step, since the drive pin (6) engages in one of the drive slots (9 to 16) during only part of a revolution of the driver element (5), and between respective pairs of drive slots (9 to 16) the Maltese-cross disc (8) has in each case a detent recess (17) in which, in the rotation positions of the Maltese-cross disc (8) and the driver element (5), a detent element (7) engages at the end of each step.

3. Espresso machine according to Claims 1 or 2,
**characterised in that**
the control device (3) comprises a memory (24) for rotation position information regarding the disc valve (1) or the Maltese-cross disc (8) or the revolution number of the driver element (5), as reference for a position change of the disc valve (1).

4. Espresso machine according to Claims 1 or 2,
**characterised in that**
the control device (3) comprises a reset device, with which the Maltese-cross disc (8) is automatically reset before a position change.

5. Espresso machine according to at least one of Claims 1 to 4,
**characterised in that**
by means of the control device (3), the rotation direction of the drive motor (2) and of the Maltese-cross transmission (4) can be reversed with the detent mechanism still in operation.

## Revendications

1. Machine à espresso, comprenant une vanne rotative à disque (1) en céramique, en guise de distributeur sélectif d'eau/vapeur, qui est en liaison d'entraînement avec un moteur d'entraînement (2), ainsi qu'un dispositif de commande (3) pour commander le moteur d'entraînement (2),
**caractérisée en ce que** dans la liaison d'entraînement entre le moteur d'entraînement (2) et la vanne rotative à disque (1) en céramique, est insérée une transmission à croix de Malte (4), qui règle la vanne rotative à disque (1) en céramique selon des pas de commutation, et **en ce que** le dispositif de commande (3) arrête le moteur d'entraînement (2) après au moins un pas de commutation de la transmission à croix de Malte (4).

2. Machine à espresso selon la revendication 1, **caractérisée en ce que** dans la transmission à croix de Malte (4), un disque de croix de Malte (8) avec des fentes d'entraînement radiales (9 à 16) ainsi qu'un élément menant rotatif (5) comportant un tenon menant (6) et placé en liaison avec le moteur d'entraînement (2), sont réalisés de façon telle que le tenon menant (6), lors d'une rotation d'un tour de l'élément menant (5), entraîne le disque de croix de Malte (8) d'un pas de commutation par le fait que le tenon menant (6) se met en prise dans l'une des fentes d'entraînement (9 à 16) au cours de seulement une partie d'un tour de rotation de l'élément menant (5), et **en ce que** le disque de croix de Malte (8) présente, entre chaque fois deux fentes d'entraînement (9 à 16), un piège d'arrêt respectif (17) dans lequel un élément d'arrêt (7) vient en prise dans les positions angulaires du disque de croix de Malte (8) et de l'élément menant (5) à la fin de chaque pas de commutation.

3. Machine à espresso selon la revendication 1 ou 2, **caractérisée en ce que** le dispositif de commande (3) comprend une mémoire (24) pour une information de position angulaire de la vanne à disque (1) et respectivement du disque de croix de Malte (8) ou du nombre de tours de rotation de l'élément menant (5), en tant que référence d'une modification de réglage de la vanne à disque (1).

4. Machine à espresso selon la revendication 1 ou 2, **caractérisée en ce que** le dispositif de commande (3) comprend un dispositif de retour en position initiale avec lequel le disque de croix de Malte (8) est automatiquement ramené en position initiale avant une modification du réglage.

5. Machine à espresso selon l'une au moins des revendications 1 à 4, **caractérisée en ce qu'**à l'aide du dispositif de commande (3), le sens de rotation du moteur d'entraînement (2) et de la transmission à croix de Malte (4) avec arrêt, est réversible.
